# EUROPEAN PATENT APPLICATION

(11) **EP 1 837 173 A1**
(43) Date of publication of application: **26.09.2007**
(21) Application number: 05814529.3
(22) Date of filing: 12.12.2005
(51) Int. Cl.: B32B 15/082, C09D 1/00, C09D 127/12, C09D 183/16, C23C 26/00, E03C 1/18, B05D 7/24, C09D 7/12

(54) **COMPOSITE MATERIAL, COATING FLUID AND METHOD FOR PRODUCING COMPOSITE MATERIAL**

(30) Priority: 16.12.2004 JP 2004364712; 14.06.2005 JP 2005174363; 30.09.2005 JP 2005287744; 08.12.2005 JP 2005355175
(71) Applicant: Toto Ltd., Kitakyushu City, Fukuoka 802-8601 (JP)
(72) Inventor: KAMESHIMA, Junji c/o Toto Ltd., Kitakyusyu-shi, Fukuoka;802860 1 (JP); NIIMI, Yasushi c/o Toto Ltd., Kitakyusyu-shi, Fukuoka;8028601 (JP); HOSOGAI, Mariko c/o Toto Ltd., Kitakyusyu-shi, Fukuoka; 8028601 (JP)
(74) Representative: Golding, Louise Ann
(86) International application number: PCT/JP2005/022797
(87) International publication number: WO 2006/064771

(57) **Abstract**

The object of the present invention is to provide a composite material which retains a design property of a base material even in a case where the external force is applied. The present invention provides a composite material comprising a base material and a coated section arranged on said base material, wherein the coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the plastic polymer particles are dispersed in the coated section substantially without contacting with each other.

## Description

### Technical Field

The present invention relates to a composite material which retains a design property of a base material even in a case where the external force is applied thereto.

### Background Art

In recent years, there has been proposed a method which prevents the impairment of the design property due to generation of flaws on a base material by applying a protective coating to surfaces of various kinds of base materials.

There have been disclosed a stainless sink which improves an antifouling property by forming a metal oxide film (for example, see Patent reference 1), an antifouling product which forms a glazed layer on a stainless surface (for example, see Patent reference 2), a molded compact which forms a coating layer consisting of colloidal silica and a silicon compound containing an epoxy radical (for example, see Patent reference 3), etc.
Patent reference 1: Japanese patent application publication No. 2004-76071
Patent reference 2: Japanese patent application publication No. 2001-152367
Patent reference 3: Japanese patent application publication No. H07-278496

### Disclosure of the Invention

### Problem to Be Solved by the Invention

However, in the stainless sink formed with the metal oxide film as described in Patent reference 1, the surface hardness is improved to a certain extent, but when contacting earthenware of burned metal oxide, etc. flaws are easily generated so as not to be sufficient in the antifouling property.

Also, in the antifouling product formed with the glazed layer as described in Patent reference 2, there is a problem that the application is limited to the base materials having heat resistance because it is required to be burned at a temperature of not less than 800 degrees centigrade when forming the glazed layer by burning. Moreover, in the case of using metal for the base material, the surface is oxidized and discolored so as to spoil the external appearance. Therefore, there is a problem that it is required to form a colored opaque blazed layer and necessarily the texture of the base material is impaired.

Further, in the molded compact which forms the coating layer consisting of the colloidal silica and the silicon compound containing the epoxy radical, the surface hardness is improved to a certain extent, but when contacting the earthenware of burned metal oxide, etc. flaws are easily generated for example by release of the colloidal silica, etc. so as not to be sufficient in the antifouling property.

The present invention is made to solve the above mentioned problems and aims to provide the composite material which retains the design property of the base material even in a case where the external force is applied thereto.

### Means for Solving the Problem

In order to solve the above mentioned problem, the present invention provides a composite material which retains the design property of a base material even in a case where the external force is applied thereto, comprising a base material and a coated section, wherein the coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the plastic polymer particles are dispersed in the coated section without coming substantially in contact with each other.

Also, the present invention provides a composite material which retains the design property of a base material even in a case where the external force is applied thereto, comprising a base material, and a coated section, wherein the coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the content of the plastic polymer particles in the coated section is not less than 1% by volume and less than 20% by volume.

In a preferred embodiment of the present invention, an irregular structure which has a convex portion corresponding to an idiomorphic form of the plastic polymer particle is formed on a surface of the coated section.

In a preferred embodiment of the present invention, an average particle size is larger than a film thickness of the coated section.

In a preferred embodiment of the present invention, the film thickness of the coated section is from 0.3µm to 20µm.

In a more preferred embodiment of the present invention, the film thickness of the coated section is from 0.3µm to 8µm.

In a preferred embodiment of the present invention, the average particle size of the plastic polymer particles is from 0.1µm to 20µm.

In a more preferred embodiment of the present invention, the average particle size is from 0.1µm to 8µm.

In a preferred embodiment of the present invention, the coated section is substantially transparent.

In a preferred embodiment of the present invention, the base material is a ductile base material.

In a more preferred embodiment of the present invention, the ductile base material is stainless steel or aluminum.

In a preferred embodiment of the present invention, the ductile base material forms a sink and/or a counter, wherein at least a portion of a surface to be used is provided with any one of the above mentioned coated sections.

The present invention provides a coating liquid which is applied to a base material and cured by heating to form a coated section on the base material, containing plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume.

In a preferred embodiment of the present invention, an average particle size of the plastic polymer particles is from 0.1 µm to 20µm.

In a more preferred embodiment of the present invention, the average particle size is from 0.1µm to 8µm.

The present invention provides a coating liquid which is applied to a base material and cured by heating to form a coated section on the base material, containing plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "C" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume.

In a preferred embodiment of the present invention, an average particle size is from 0.1µm to 20µm.

In a more preferred embodiment of the present invention, the average particle size is from 0.1µm to 8µm.

The present invention provides a manufacturing method of a composite material comprising the steps of applying to a base material a coating liquid which is applied to a base material and cured by heating to form a coated section on the base material and which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, and curing the coating liquid by heating together with the base material to form on the base material the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) the plastic polymer particles.

The present invention provides a manufacturing method of a composite material comprising the steps of applying to a base material a coating liquid which is applied to a base material and cured by heating to form a coated section on the base material and which contains plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, and curing the coating liquid by heating together with the base material to form on the base material the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) the plastic polymer particles.

The present invention provides a manufacturing method of a composite material comprising the steps of drawing a ductile base material into the form of a sink and/or a counter, applying on the ductile base material a coating liquid which is applied to a base material and cured by heating to form a coated section on the base material and which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, and curing the coating liquid by heating together with the base material.

The present invention provides a manufacturing method of a composite material comprising the steps of drawing a ductile base material into the form of a sink and/or a counter, applying on the ductile base material a coating liquid which is applied to a base material and cured by heating to form a coated section on the base material and which contains plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, and curing the coating liquid by heating.

The present invention provides a manufacturing method of a composite material comprising the steps of applying on a ductile base material a coating liquid which is applied to a base material and cured by heating to form a coated section on the base material and which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, curing the coating liquid by heating together with the base material, and drawing the coated base material into the form of a sink and/or a counter.

The present invention provides a manufacturing method of a composite material comprising the steps of applying on a ductile base material a coating liquid which is applied to a base material and cured by heating to form a coated section on the base material and which contains plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, curing the coating liquid by heating, and drawing the coated base material into the form of a sink and/or a counter.

### Effects of the Invention

According to the present invention, it is possible to provide the composite material which retains the design property of the base material even in a case where the external force is applied thereto.

### Brief Description of the Drawings

FIG 1 is a cross-sectional view of a composite material according to the present invention;
FIG 2 is a cross-sectional view of the composite material according to the present invention;
FIG 3 is a cross sectional view of the composite material according to the present invention;
FIG. 4 is a surface observation photograph of a coated section of the composite material according to a second embodiment of the present invention;
FIG 5 is a schematic view in perspective of a kitchen provided with a sink embodying the present invention;
FIG 6 is a schematic view of a sink which has the composite material of the present invention on a portion of a bottom surface thereof;
FIG 7 is a schematic view of a sink on an entire bottom surface of which the composite material of the present invention is provided;
FIG 8 is a schematic view of a counter which has the composite material of the present invention on a portion of a surface thereof;
FIG 9 is a schematic view of a counter on an entire surface of which the composite material of the present invention is provided; and
FIG 10 is a schematic view of the sink and the counter on the entire surfaces of which the composite material of the present invention is provided.

### Best Mode for Carrying out the Invention

The best mode of the present invention will now be explained.

In one embodiment of the present invention, a composite material comprises a base material, and a coated section arranged on the base material, wherein the coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the plastic polymer particles are dispersed in the coated section without coming substantially in contact with each other. With this structure, it is possible to provide the composite material which retains the design property of the base material even in a case where the external force is applied thereto.

In one embodiment of the present invention, the composite material comprises the base material, and the coated section arranged on the base material, wherein the coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the content of the plastic polymer particles in the coated section is not less than 1% by volume and less than 20% by volume. With this structure, it is possible to provide the composite material which retains the design property of the base material even in a case where the external force is applied thereto.

Herein, (A) silica or at least a kind selected from the group of an average composition formula RₚSiO_{(4-p)/2} in which R is a hydrogen atom, a fluorine atom or a univalent organic radical, and p is a number which satisfies 0<p<4, is adapted to constitute a siloxane network on the base material and the partial existence of un-reactive residue which does not form the siloxane network may be permitted. Also, a minute amount of metal, nitrogen and hydrogen may be contained in silica, and what is called a water glass, etc may be included.

Herein, since the plastic polymer particles give a certain extent of flexibility to the coated section, the follow-up characteristics to the base material are improved so as to effectively perform the function of retaining the design property of the base material.

When the plastic polymer particles are dispersed in the coated section without coming substantially in contact with each other, the flexibility of the plastic polymer particles is given to the coated section without disturbance of the siloxane network, so that the function of retaining the design property of the base material can be effectively performed.

When the plastic polymer particles exist excessively in the coated section and the plastic polymer particles are condensed, release of the plastic polymer particles and the like occurs by the application of the external force so as not to perform the function of retaining the design property of the base material. When a percentage by volume of the plastic polymer particles is less than 1%, the function of retaining the design property of the base material is not performed sufficiently in the case where the external force is applied, while when being not less than 20%, the siloxane network in the coated section becomes coarse, so that also the function of retaining the design property of the base material is not performed sufficiently. Herein, the percentage by volume of the plastic polymer particles in the coated section is a percentage of the plastic polymer particles relative to a total volume of the coated section.

Herein, the coated section may be formed in such a state that the plastic polymer particles are dispersed in the siloxane network. Moreover, an irregular structure which has convex portions corresponding to an idiomorphic form of the plastic polymer particle may be formed on a surface of the coated section. When the irregular structure which has the convex portions corresponding to the idiomorphic form of the plastic polymer particle is formed on the surface of the coated section, the plasticity of the plastic polymer particles exerts remarkably. Moreover, in the case where the external force is applied, the convex portions corresponding to the idiomorphic form of the plastic polymer particle prevent transmission of the external force to the siloxane network, so that the function of retaining the design property of the base material is remarkably performed under the application of the external force.

In the present invention, it is preferable that an average particle size is larger than a film thickness of the coated section. With this structure, the irregular structure which has the convex portions corresponding to the idiomorphic form of the plastic polymer particle is accurately formed on the surface of the coated section.

In the present invention, it is preferable that the plastic polymer particles are formed of fluorine resin particles. The fluorine resin particles are superior in slipperiness and small in surface energy, whereby the function of retaining the design property of the base material is effectively performed.

In the present invention, it is preferable that the film thickness of the coated section is from 0.3µm to 20µm. Herein, the film thickness in the present invention is a film thickness of the siloxane network and, in the case where the plastic polymer particles are partially exposed, means a thickness not including the exposed portions. It is possible to measure by cross-section observation with a scanning electron microscope, etc. When the film thickness is less than 0.3µm, the function of retaining the design property of the base material is not performed sufficiently in the case where the external force is applied, while when being more than 20µm, cracking or the like occurs in the coated section so that similarly the function of retaining the design property of the base material is not performed sufficiently in the case where the external force is applied.

In the present invention, it is more preferable that the film thickness of the coated section is from 0.3µm to 8µm. When the film thickness is 8µm or less, it is possible to easily form the coated section by using various kinds of coat applying methods while the external appearance of the coated section is improved.

In the present invention, the average particle size of the plastic polymer particles is from 0.1µm to 20µm. When the average particle size is less than 0.1µm, the function of retaining the design property of the base material is decreased in the case where the external force is applied, while when being more than 20µm, the design property of the base material may be impaired.

Preferably, in the present invention, the average particle size is from 0.1µm to 8µm. When the average particle size is 8µm or less, it is possible to easily form the coated section by using various kinds of coat applying methods while an external appearance of the coated section is improved.

In a preferred embodiment of the present invention, the film thickness of the coated section is from 0.3µm to 8µm, and the average particle size of the plastic polymer particles is from 0.5µm to 20µm such that the average particle size of the plastic polymer particles is larger than the film thickness of the coated section. With this structure, the irregular structure which has the convex portions corresponding to the idiomorphic form of the plastic polymer particle is accurately formed on the surface of the coated section. At the same time, the coated section allowing the function which retains the design property to be effectively performed is formed in a good external appearance.

More preferably, in the present invention, the base material is a ductile base material. The ductile base material is superior in workability and applied to various industrial products. Metal such as stainless steel, aluminum or the like is its typical example and is used for cooking utensils, kitchen sinks, kitchen counters, etc. Although the ductile base material, because of its properties, is inferior in surface hardness and poor in antifouling property, effects of retaining the design property of the base material at the time of application of the external force as keeping the ductile property of the base material are obtained by forming the coated section of the present invention. Since the coated section of the present invention contains the plastic polymer particles, the flexibility is given to the coated section thereby to be superior in follow-up characteristics, so that the coated section has effects of retaining the design property of the base material when the external force is applied thereto as keeping the ductile property of the ductile base material.

The composite material has the ductile base material to form a sink and/or a counter, wherein at least a portion of a surface to be used is provided with the coated section of the present invention, so that it has the function of retaining the design property of the base material when the external force such as sliding frictional wear and the like due to contact with tableware and the like is applied, so as to retain the design property of the base material. Further, although stresses are generated in the base material and the coated section by a dropping of a heavy object or exposure to boiling water, the coated section of the present invention contains the plastic polymer particles so as to be given a certain extent of flexibility, so that the follow-up characteristics to the base material are exerted even in the case where the heavy object dropped thereon or where the temperature of the base material changed due to successive exposure to boiling water and cold water, thereby to prevent exfoliation or release of the coated section.

As a coating liquid for forming the coated section of the present invention there is preferably used the coating liquid to be applied to the base material and cured by heating to form the coated section on the base material, which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume. The coating liquid may contain a diluent solvent.

Similarly, as the coating liquid for forming the coated section of the present invention there may be also preferably used the coating liquid to be applied to a base material and cured by heating to form a coated section on the base material, which contains plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by -(CH₂)ₘ-(herein, "m" is an integer of from 1 to 6), and "d" is 0 or 1) or the hydrolyzed one of the aforementioned compound in such a state that a content of the polymer particles in the coated section is not less than 1% by volume and less than 20% by volume. Either the compound or the hydrolyzed one or proper mixtures of both may be used. The diluent solvent may be contained in the coating liquid.

In a more preferred embodiment of the present invention, an average particle size of the plastic polymer particles is from 0.1µm to 20µm. Herein, in the present invention, the average particle size is a dispersion particle size and can be measures with a particle size dispersion meter of laser diffraction type. When the average particle size is less than 0.1µm, the function of retaining the design property of the base material is decreased in the case where the external force is applied, while when being more than 20µm, the design property of the base material may be impaired.

In a more preferred embodiment of the present invention, the average particle size is from 0.1µm to 8µm. When the average particle size is not more than 8µm, it is possible to easily form the coated section with various kinds of coat applying methods. At the same time, the dispersion stability of the plastic polymer particles in the coating liquid is increased so that the external appearance of the coated section is improved.

As a manufacturing method of the composite material of the present invention, there is provided a method according to the present invention comprising the steps of applying to a base material a coating liquid which is applied to a base material and cured by heating to form a coated section on the base material and which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, and curing the coating liquid by heating together with the base material to form on the base material the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) the plastic polymer particles.

Herein, (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, is converted to silica by heating and cured to form the siloxine network on the base material.

For the conversion to silica, it is preferable to heat at 100 or more degrees centigrade. More preferably, when heating at not less than 200 degrees centigrade, the reaction of conversion is accelerated. Also, it is possible to accelerate the convention by a catalyst.

The catalyst being used in the present invention is (C) the compound which accelerates the conversion to silica, represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen. When showing concrete examples, there are included N-heterocyclic compounds such as 1-methylpiperazine, 1-methylpiperidine, 4,4'-trimethylenedipiperidine, 4,4'-trimethylenebis(1-methylpiperidine), diazabicyclo-[2,2,2]octane, cis-2,6-dimethylpiperazine, 4-(4-methylpiperidine)pyridine, pyridine, dipyridine, α-picoline, β-picoline, γ-picoline, piperidine, lutidine, pyrimidine, pyridazine, 4,4-trimethylenedipyridine, 2-(methylamino)pyridine, pyrazine, quinoline, quinoxaline, triazine, pyrrole, 3-pyroline, imidazole, triazole, tetrazole, 1-methylpirrolidine and the like; amines such as methylamine, dimethylamine, trimethylamine, ethylamine, diethylamine, triethylamine, propylamine, dipropylamine, tripropylamine, butylamine, dibutylamine, tributhylamine, pentylamine, dipentylamine, tripentylamine, hexylamine, dihexylamine, trihezylamine, heptylamine, diheptylamine, octylamine, dioctylamine, trioctylamine, phenylamine, diphenylamine, triphenylamine and the like; moreover, DBU(1,8-diazabicyclo[5,4,0]7-undecene); DBN(1,5-diazabicyclo[4,3,0]5-nonene); 1,5,9-triazacyclododecane, 1,4,7-triazacyclononane; and the like.

Further, as preferable catalysts, there are given an organic acid, an inorganic acid, a metal carboxylate, an acetylacetona complex and a metal minute particle. As the organic acid there are given an acetic acid, a propionic acid, a butyric acid, a valerianic acid, a maleic acid, a stearic acid, and the like while as the inorganic acid, there are given a hydrochloric acid, a nitric acid, a sulfuric acid, a phosphoric acid, a hydrogen peroxide, a chloric acid, a hypochlorite acid, and the like. The metal carboxylate is a compound represented by the formula: (RCOO)nM in which R represents a fatty radical or an alicyclic radical of from 1 to 22 in carbon number, M represents at least a kind of metal selected from the group consisting of Ni, Ti, Pt, Rh, Co, Fe, Os, Pd, Ir and AL, and "n" is a valence of M. The metal carboxylate may be either anhydride or hydrate. The acetylacetona complex is a complex that a negative ion, acac', generated from acetylacetone by acid dissociation is coordinated to a metal atom, and generally is represented by the formula (CH3COCHCOCH3)nM in which M represents metal whose inonic valency is "n". As preferred metal, there are given, for example, nickel, platinum, palladium, aluminum, rhodium and the like. As the metal minute particle, Au, Ag, Pd and Ni are preferable and particularly Ag is preferable. It is preferable that a particle size of the metal minute particle is less than 0.5µm. 0.1µm or less is more referable and less than 0.05µm is most preferable. Other than the above mentioned, an organic metal compound and the like such as peroxide, metal chloride, ferrocene, ziconocene and the like may be used.

Also, as a preferred manufacturing method of the composite material of the present invention, there is provided a method comprising the steps of applying to a base material a coating liquid which is applied to a base material and cured by heating to form a coated section on the base material and which contains plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R70)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, and curing the coating liquid by heating together with the base material to form on the base material the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) the plastic polymer particles.

According to the method comprising the steps of applying to a base material a coating liquid which is applied to a base material and cured by heating to form a coated section on the base material and which contains plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, and curing the coating liquid by heating together with the base material to form on the base material the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) the plastic polymer particles. Herein, (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, is converted to silica by heating and cured to form the siloxane network on the base material, the coated section which is small in contraction and fine in structure is formed, since the siloxane network is formed by coordination of Si-N to Si-O, so that the function of retaining the design property of the base material can be effectively performed when the external force is applied thereto.

As another manufacturing method of the composite material of the present invention which has a ductile base material to form a sink and/or a counter and, at least on a portion of a surface to be used, a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, there is provided a method comprising the steps of drawing the ductile base material into the form of a sink and/or a counter, applying on the ductile base material a coating liquid which is applied to the base material and cured by heating to form the coated section on the base material and which contains the plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, and curing the coating liquid by heating together with the base material.

As still another manufacturing method of the composite material of the present invention which has a ductile base material to form a sink and/or a counter and, at least on a portion of a surface to be used, a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, there is provided a method comprising the steps of drawing the ductile base material into the form of a sink and/or a counter, applying on the ductile base material a coating liquid which is applied to the base material and cured by heating to form the coated section on the base material and which contains the plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by -(CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, and curing the coating liquid by heating.

According to the method of forming the coated section, after drawing the ductile base material into the form of a sink and/or a counter, residual stresses on the coated section can be reduced so that the function of retaining the design property of the base material is effectively performed when the external force is applied.

As yet another manufacturing method of the composite material of the present invention which has a ductile base material to form a sink and/or a counter and, at least on a portion of a surface to be used, a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, there is given a method comprising the steps of applying on a ductile base material a coating liquid which is applied to the base material and cured by heating to form the coated section on the base material and which contains the plastic polymer particles and (C) a compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, wherein the coating liquid contains the plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of the polymer particles in the coated section is not less than 1% by volume and less than 20% by volume, curing the coating liquid by heating together with the base material, and drawing the base material into the form of a sink and/or a counter.

As a further manufacturing method of the composite material of the present invention which has a ductile base material to form a sink and/or a counter and, at least on a portion of a surface to be used, a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, there is provided a method comprising the steps of applying on a ductile base material a coating liquid which is applied to the base material and cured by heating to form the coated section on the base material and which contains the plastic polymer particles and at least a kind of compound selected from the group consisting of (D) (D-1) a compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by the following general formula (2), Si(OR5)₄ (2) (in the formula, R5 is a univalent organic radical), and (D-3) a compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, wherein the coating liquid contains the plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound in such a state that a content of the polymer particles in the coated section is not less than 1% by volume and less than 20% by volume, curing the coating liquid by heating, and drawing the coated base material into the form of a sink and/or a counter.

According to the method of drawing the ductile base material into the form of sink and/or counter after forming the coated section, the coating liquid is applied to the base material before being formed into the complicated form of sing and/or counter so that it is possible to easily manufacture the composite material which has the ductile base material to form a sink and/or a counter and, at least a portion of the surface to be used, the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles.

When the heating temperature is raised, the base materials to be used are limited in relation to heat resistance. For example, in the case of stainless steel for use in a sink and/or a counter, etc., the steel has heat resistance but is not preferable in that the design property may be impaired at 400 degrees centigrade or more because discoloration occurs due to oxidation of surface. Moreover, in view of the heat resistance of the plastic polymer particles, it is preferable that the temperature is 350 degrees centigrade or less.

The composite material and the manufacturing method of the composite material according to the present invention will be concretely explained hereunder.

In the present invention, as the base material there are used a metallic material such as iron, aluminum, stainless steel, etc., glass, ceramics, plastic, tree, stone, cement, concrete, combinations of these materials, laminated materials of these materials, etc.

Further, in the present invention, (A) silica or at least a kind selected from the group of an average composition formula RₚSiO_{(4-p)/2} in which R is a hydrogen atom, a fluorine atom or a univalent organic radical, and p is a number which satisfies 0<p<4, forms the siloxane network on the surface of the base material so as to form the coated section.

In the plastic polymer particle of the present invention, there are included polymers such as a cellulose derivative, an olefin resin, a halogen contained resin, a vinyl alcohol resin, a vinyl ester resin, a (meta) acrylic resin, a styrene resin, a polyester resin, a polyamide resin, a polycarbonate resin, a polyether resin, a polysulfone resin and the like, and hardening materials such as an epoxy resin, an unsaturated polyester resin, a di-allyl phthalate resin, a silicone resin and the like. It is possible to use the one which has the heat resistance over a heating temperature in the case of forming the siloxine network. Bridging polymers may be used because it is superior in heat resistance.

In the present invention, it is preferable that the plastic polymer particle is spherical in shape. In this respect, a fluorine resin which is superior in slip property, small in surface energy and superior in heat resistance may be particularly preferably used.

Next, as a fluorine resin particle there is given a fluoro radical contained polymer such as polytetrafluoroethyrene, poly(vinylidene fluoride), poly(vinyl fluoride), polychlorotrifluoroethylene, a tetrafluoroethylene-hexafluoropropylene polymer, an ethylene-chlorotrifluoroethylene polymer, a tetrafluoroethylene-parfluoroalkylvinylether copolymer, a parfluorocyclo polymer, a vinylether-fluoroolefin copolymer, a vinylester-fluoroolefin coplymer, a tetrafluoroethylene-vinylether copolymer, a chlorotrifluoroethylene-vinylether copolymer, a bridged tetrafluoroethyleneurethane compound, a bridged tetrafluoroehtyleneepoxy compound, a bridged tetrafluoroethyleneacryl compound, a bridged tetrafluoroethylenemelamine compound and the like.

As the cellulose derivative, there are given a cellulose-ester class such as cellulose-acetate, cellulose-propionate, cellulose-butylate cellulose-phthalate and the like, a cellulose carbamate class, and a cellulose-ether class such as alkyl-cellulose, benzyl-cellulose, hydroxyalkyl-cellulose, carboxymethyl-cellulose and cyanoethyl-cellulose and the like.

As the olefin resin, there are given a homopolymer or a copolymer of C2-6 olefin (an ethylene resin such as an ethylene-propylene copolymer and the like, a polypropylene resin such as polypropylene, a propylene-ethylene copolymer, a propylene-butene copolymer and the like, poly(methyl-pentene-1), and the like), a copolymer between C2-6 olefin and copolymerized monomer (an ethylene-(meta)acrylic acid copolymer or an ionomer, an ethylene-(meta)acrylic ester copolymer, an ethylene-vinyl acetate copolymer and the like), and the like.

As the halogen contained resin, there are given a vinyl halogenide resin (a homopolymer or a copolymer of a monomer containing vinyl chloride such as poly(vinylidene chloride) and the like or of a fluorine contained monomer, a copolymer between a poly(vinylidene chloride) or fluorine contained monomer, such as a vinyl chloride-vinyl acetate copolymer, a vinyl chloride-(meta)acrylic ester copolymer, a tetrafluoroethylene-ethylene copolymer, etc., and a copolymerized monomer, and the like), a vinylidene halogenide resin (a copolymer between a polyvinylidene fluolide or a vinylidene chloride or fluorine contained monomer and other monomer), and the like.

In the vinyl alcohol resin and the derivative thereof, there are included a vinyl alcohol resin such as polyvinyl alcohol, an ethylene-vinyl alcohol copolymer and the like, and derivatives thereof like polyvinyl acetal such as polyvinyl holmale, polyvinyl butyral and the like.

As the vinyl ester resin, there are given a homopolymer or a copolymer of a vinyl ester series monomer such as polyvinyl acetate, etc. , a copolymer between a vinyl ester series monomer and a copolymerized monomer, such as a vinyl acetate-ethylene copolymer, a vinyl acetate-vinyl chloride copolymer, a vinyl acetate-(meta)acrylic ester copolymer, etc., and the like.

As the (meta) acrylic resin, there are given, for example, poly(meta) acrylic ester such as poly(meta)methyl acrylate, etc., a methyl methacrylate-(meta) acrylic acid copolymer, a methyl methacrylate-(meta) acrylic ester-(meta) acrylic acid copolymer, a methyl methacrylate-(meta) acrylic ester copolymer, a (meta) acrylic ester-styrene copolymer (an MS resin, etc.), and the like.

As the styrene resin, there are given a homopolymer or a copolymer of a styrene monomer such as polystyrene, a styrene-α-methylstyrene copolymer, etc., a copolymer between a styrene monomer and a copolymerized monomer, such as a styrene-acrylonitrile copolymer (an AS resin), a styrene-(meta) acrylic ester copolymer (a styrene-methyl methacrylate copolymer, etc.), a styrene-maleic anthydride copolymer, etc., and the like.

As the polyester resin, there are included aromatic polyester using an aromatic dicarboxylic acid such as a terephthalic acid, etc. and alkyleneglycol, aliphatic polyester using an aliphatic dicarboxylic acid such as an adipic acid, etc., a polyallylate resin, a liquid crystalline polyester, and the like. As the polyester resin there are given a liquid crystalline polyester resin, an aromatic polyester resin and the like.

As the polyamide resin, there are given aliphatic polyamide such as nylon 46, nylon 6, nylon 66, nylon 610, nylon 612, nylon 11, nylon 12, etc., aromatic polyamide such as xylene diamine adipate (MXD-6), etc., and the like.

As the polycarbonate resin, there are included bisphenol class (bisphenol A, etc.) based aromatic polycarbonate, aliphatic polycarbonate such as polydiethylene glycol bis-allyl carbonate, etc., and the like.

As the polyether resin, there may be exemplified polyoxialkylene glycol, polyoximethylene such as polyacetal homopolymer or copolumer, etc., polyether-etherketone, and the like, while as the polysulfone resin, there may be exemplified polysulfone, polyether-sulfone and the like.

In the present invention, the coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, may be formed in such a manner that the plastic polymer particles are dispersed in the siloxane network thereof and the irregular structure which has the convex portions corresponding to the idiomorphic form of the plastic polymer particle are formed thereon.

In the present invention, that the design property of the base material is retained even in the case where the external force applied means the function of preventing the decrease of the deign property due to flaws which are generated, for example, by coming in contact with solid objects, and to put it more concretely, it means the function of preventing the decrease of the design property due to scratches which are generated by a slide and the like of tableware, etc. for example, in the case of the sink and/or the counter.

In the present invention, the ductile base material means the base material which has the property capable of being stretched beyond the elastic limit thereof without destruction. As a material which is rich in ductility, there are given metallic materials such as iron and steel, cupper, aluminum, stainless steel, etc.

In the present invention, the substantial transparence means transparency of such a level that the texture of the base material is not damaged and the transparency of such a level that the design property of the base material can be confirmed. For example, in the composite material which has the coated section on the base material of stainless steel, it means that the luster, texture and color tone of the stainless steel can be confirmed. In a case where there are patterns on the base material, it means the transparency capable of confirming the patterns.

In the composite material of the present invention which has the ductile base material to form a sink and/or a counter and the coated section at least on a portion of a surface to be used, the coated section may be formed only in the vicinity of a center of a sink bottom and on a peripheral portion of the sink of the counter with which the tableware and the like comes into contact particularly remarkably on the used surfaces of the sink and/or the counter. Of course the coated section may be formed on the entire surfaces to be used.

In the present invention, with respect to (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, as the alkyl radical there are given methyl, ethyl, propyl, butyl, pentyl, hexyl, octyl, decyl and the like. As the alkenyl radical, there are given vinyl, allyl, butenyl, pentenyl, hexenyl, butynyl, octenyl, decenyl, etc. As an aryl radical, there are given phenyl, tolyl, xylyl, naphthyl and the like.

In the present invention, with respect to the coating liquid which contains at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R70)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of the aforementioned compound, as concrete examples of the compound represented by the general formula (1) there are given trimethoxysilane, triethoxysilane, tri-n-propoxysilane, tri-iso-propoxysilane, tri-n-butoxysilane, tri-sec-butoxysilane, tri-tert-butoxysilane, triphenoxysilane, fluorotrimethoxysilane, fluorotriethoxysilane, fluorotri-n-propoxysilane, fluorotri-iso-propoxysilane, fluorotri-n-butoxysilane, fluorotri-sec-butoxysilane, fluorotri-tert-butoxysilane, fluorotriphenoxysilane, methyltrimethoxysilane, methyltriethoxysilane, methyltri-n-propoxysilane, methyltri-iso-propoxysilane, methyltri-n-butoxysilane, methyltri-sec-butoxysilane, methyltri-tert-butoxysilane, methyltriphenoxysilane, ethyltrimethoxysilane, ethyltriethoxysilane, ethytri-n-propoxsilane, ethyltri-iso-propoxysilane, ethyltri-n-butoxysilane, ethyltri-sec-butoxysilane, ethyltri-tert-butoxysilane, ethyltriphenoxysilane, vinyltrimethoxysilane, vinyltriethoxysilane, vinyltri-n-propoxysilane, vinyltri-iso-propoxysilane, vinyltri-n-butoxysilane, vinyltri-sec-butoxysilane, vinyltri-tert-butoxysilane, vinyltriphenoxysilane, n-propyltrimethoxysilane, n-propyltriethoxysilane, n-propyltri-n-propoxysilane, n-propyltri-iso-propoxysilane, n-propyltri-n-tert-butoxysilane, n-propyltri-sec-butoxysilane, n-propyltri-tert-butoxysilane, n-propyltriphenoxysilane, i-propyltrimethoxysilane, i-propyltriethoxysilane, i-propyltri-n-propoxysilane, i-propyltri-iso-propoxysilane, i-propyltri-n-butoxysilane, i-propyltri-sec-butoxysilane, i-propyltri-tert-butoxysilane, i-propyltriphenoxysilane, n-butyltrimethoxysilane, n-butyltriethoxysilane, n-butyltri-n-propoxysilane, n-butyltri-iso-propoxysilane, n-butyltri-n-butoxysilane, n-butyltri-sec-butoxysilane, n-butyltri-tert-butoxysilane, n-butyltriphenoxysilane, sec-butyltrimethoxysilane, sec-butyltriethoxysilane, sec-butyl-tri-n-propoxysilane, sec-butyl-tri-iso-propoxysilane, sec-butyl-tri-n-butoxysilane, sec-butyl-tri-sec-butoxysilane, sec-butyl-tri-tert-butoxysilane, sec-butyl-triphenoxysilane, t-butyltrimethoxysilane, t-butyltriethoxysilane, t-buthyltri-n-propoxysilane, t-butyltri-iso-propoxysilane, t-butyltri-n-butoxysilane, t-butyltri-sec-butoxysilane, t-butyltri-tert-butoxysilane, t-butyltriphenoxysilane, phenyltrimethoxysilane, phenyltriethoxysilane, phenyltri-n-propoxysilane, phenyltri-iso-propoxysilane, phenyltri-n-butoxysilane, phenyltri-sec-butoxysilane, phenyltri-tert-butoxysilane, phenyltriphenoxysilane, vinyltrimethoxysilane, vinyltriethoxysilane, γ-aminopropyltrimethoxysilane, γ-aminopropyltriethoxysilane, γ-glycidoxypropeltrimethoxysilane, γ-glycidoxypropyltriethoxysilane, γ-trifloropropyltrimethoxysilane, γ-trifloropropyltriethoxysilane, dimethyldimethxysilane, dimethyldiethoxysilane, dimethyl-di-n-propoxysilane, dimethyl-di-iso-propoxysilane, dimethyl-di-n-butoxysilane, dimethyl-di-sec-butoxysilane, dimethyl-di-tert-butoxysilane, dimethyldiphenoxysilane, diethyldimethoxysilane, diethyldiethoxysilane, diethyl-di-n-propoxysilane, diethyl-di-iso-propoxysilane, diethyl-di-n-butoxysilane, diethyl-di-sec-butoxysilane, diethyl-di-tert-butoxysilane, diethyldiphenoxysilane, di-n-propyldimethoxysilane, di-n-propyldiethoxysilane, di-n-propyl-di-n-propoxysilane, di-n-propyl-di-iso-propoxysilane, di-n-propyl-di-n-butoxysilane, di-n-propil-di-sec-butoxysilane, di-n-propyl-di-tert-butoxysilane, di-n-propyl-di-phenoxysilane, di-iso-propyldimethoxysilane, di-iso-propyldiethoxysilane, di-iso-propyl-di-n-propoxysilane, di-iso-propyl-di-iso-propoxysilane, di-iso-propyl-di-n-butoxysilane, di-iso-propyl-di-sec-butoxysilane, di-iso-propyl-di-tert-butoxysilane, di-iso-propyl-di-phenoxysilane, di-n-butyldimethoxysilane, di-n-butyldiethoxysilane, di-n-butyl-di-n-propoxysilane, di-n-butyl-di-iso-propoxysilane, di-n-butyl-di-n-butoxysilane, di-n-butyl-di-sec-butoxysilane, di-n-butyl-di-tert-butoxysilane, di-n-butyl-di-phenoxysilane, di-sec-butyldimethoxysilane, di-sec-butyldiethoxysilane, di-sec-butyl-di-n-propoxysilane, di-sec-butyl-di-iso-propoxysilane, di-sec-butyl-di-n-butoxysilane, di-sec-butyl-di-sec-butoxysilane, di-sec-butyl-di-tert-butoxysilane, di-sec-butyl-di-phenoxysilane, di-tert-butyldimethoxysilane, di-tert-butyldiethoxysilane, di-tert-butyl-di-n-propoxysilane, di-tert-butyl-di-iso-propoxysilane, di-tert-butyl-di-n-butoxysilane, di-tert-butyl-di-sec-butoxysilane, di-tert-butyl-di-tert-butoxysilane, di-tert-butyl-di-phenoxysilane, diphenyl-di-methoxysilane, diphenyl-di-ethoxysilane, diphenyl-di-n-propoxysilane, diphenyl-di-iso-propoxysilane, diphenyl-di-n-butoxysilane, diphenyl-di-sec-butoxysilane, diphenyl-di-tert-butoxysilane, diphenyldiphenoxysilane, divinyltrimethoxysilane and the like.

In the present invention, as concrete examples of the compound represented by the general formula (2) there are given tetramethoxysilane, tetraethoxysilane, tetra-n-propoxysilane, tetra-iso-propoxysilane, tetra-n-butoxysilane, tetra-sec-butoxysilane, tetra-tert-butoxysilane, tetraphenoxysilane and the like.

In the present invention, as concrete examples of the compound represented by the general formula (3) there are given hexamethoxydisiloxane, hexaethoxydisiloxane, hexaphenoxydisiloxane, 1,1,1,3,3-pentamethoxy-3-methyldisiloxane, 1,1,1,3,3-pentaethoxy-3-methyldisiloxane, 1,1,1,3,3-pentaphenoxy-3-methyldisiloxane, 1,1,1,3,3-pentamethoxy-3-ethyldisiloxane, 1,1,1,3,3-pentaethoxy-3-ethyldisiloxane, 1,1,1,3,3-pentaphenoxy-3-ethyldisiloxane, 1,1,1,13,3-pentamethoxy-3-phenyldisiloxane, 1,1,1,3,3-pentaethoxy-3-phenyldisiloxane, 1,1,1,3,3-pentaphenoxy-3-phenyldisiloxane, 1,1,3,3-tetramethoxy-1,3 -dimethyldisiloxane, 1,1,3,3-tetraethoxy-1,3-dimethyldisiloxane, 1,1,3,3-tetraphenoxy-1,3-dimethyldisiloxane, 1,1,3,3-tetramethoxy-1,3-diethyldisiloxane, 1,1,3,3-tetraethoxy-1,3-diethyldisiloxane, 1,1,3,3-tetraphenoxy-1,3-diethyldisiloxane, 1,1,3,3-tetramethoxy-1,3-diphenyldisiloxane, 1,1,3,3-tetraethoxy-1,3-diphenyldisiloxane, 1,1,3,3-tetraphenoxy-1,3-diphenyldisiloxane, 1,1,3-trimethoxy-1,3,3-trimethyldisiloxane, 1,1,3-triethoxy-1,3,3-trimethyldisiloxane, 1,1,3-triphenoxy-1,3,3trimethyldisiloxane, 1,1,3-trimethoxy-1,3,3-triethyldisiloxane, 1,1,3-triethoxy-1,3,3-triethyldisiloxane, 1,1,3-triphenoxy-1,3,3-triethyldisiloxane, 1,1,3-trimethoxy-1,3,3-triphenyldisiloxane, 1,1,3-triethoxy-1,3,3-triphenyldisiloxane, 1,1,3-triphenoxy-1,3,3-triphenyldisiloxane, 1,3-dimethoxy-1,1,3,3-tetramethyldisiloxane, 1,3-diethoxy-1,1,3,3-tetramethyldisiloxane, 1,3-diphenoxy-1,1,3,3-tetramethyldisiloxane, 1,3-dimethoxy-1,1,3,3-tetraethyldisiloxane, 1,3-diethoxy-1,1,3,3-tetraethyldisiloxane, 1,3-diphenoxy-1,1,3,3-tetraethyldisiloxane, 1,3-dimethoxy-1,1,3,3-tetraphenyldisiloxane, 1,3-diethoxy-1,1,3,3-tetraphenyldisiloxane, 1,3-diphenoxy-1,1,3,3-tetraphenyldisiloxane, hexamethoxydisilane, hexaethoxydisilane, hexaphenoxydisilane, 1,1,1,2,2-pentamethoxy-2-methyldisilane, 1,1,1,2,2-pentaethoxy-2-methyldisilane, 1,1,1,2,2-pentaphnoxy-2-methyldisilane, 1,1,1,2,2-pentamethoxy-2-ethyldisilane, 1,1,1,2,2-pentaethoxy-2-ethyldisilane, 1,1,1,2,2-pentaphenoxy-2-ethyldisilane, 1,1,1,2,2-pentamethoxy-2-phenyldisilane, 1,1,1,2,2-pentaethoxy-2-phenyldisilane, 1,1,1,2,2-pentaphenoxy-2-phenyldisilane, 1,1,2,2-tetramethoxy-1,2-dimethyldisilane, 1,1,2,2-tetraethoxy-1,2-dimethyldisilane, 1,1,2,2-tetraphenoxy-1,2-dimethyldisilane, 1,1,2,2-tetramethoxy-1,2-diethyldisilane, 1,1,2,2-tetraethoxy-1,2-diethyldisilane, 1,1,2,2-tetraphenoxy-1,2-diethyldisilane, 1,1,2,2-tetramethoxy-1,2-diphenyldisilane, 1,1,2,2-tetraethoxy-1,2-diphenyldisilane, 1,1,2,2-tetraphenoxy-1,2-diphenyldisilane, 1,1,2-trimethoxy-1,2,2-trimethyldisilane, 1,1,2-triethoxy-1,2,2-trimethyldisilane, 1,1,2-triphenoxy-1,2,2-trimethyldisilane, 1,1,2-trimethoxy-1,2,2-triethyldi silane, 1,1,2-triethoxy-1,2,2-triethyldisilane, 1,1,2-triphenoxy-1,2,2-triethyldisilane, 1,1,2-trimethoxy-1,2,2-triphenyldisilane, 1,1,2-triethoxy-1,2,2-triphenyldisilane, 1,1,2-triphenoxy-1,2,2-triphenyldisilane, 1,2-dimethoxy-1,1,2,2-tetramethyldisilane, 1,2-diethoxy-1,1,2,2-tetramethyldisilane, 1,2diphenoxy-1,1,2,2-tetramethyldisilane, 1,2-dimethoxy-1,1,2,2-tetraethyldisilane, 1,2-diethoxy-1,1,2,2-tetraethyldisilane, 1,2-diphenoxy1,1,2,2-tetraethyldisilane, 1,2-dimethoxy-1,1,2,2-tetraphenyldisilane, 1,2-diethoxy-1,1,2,2-tetraphenyldisilane, 1,2-diphenoxy-1,1,2,2-tetraphenyldisilane, bis(trimethoxysilyl)methane, bis(triethoxysilyl)methane, bis(tri-n-propoxysilyl)methane, bis(tri-i-propoxysilyl)methane, bis(tri-n-butoxysilyl)methane, bis(tri-sec-butoxysilyl)methane, bis(tri-t-butoxysilyl)methane, 1,2-bis(trimethoxysilyl)ethane, 1,2-bis(triethoxysilyl)ethane, 1,2-bis(tri-n-propoxysilyl)ethane, 1,2-bis(tri-i-propoxysilyl)ethane, 1,2-bis(tri-n-butoxysilyl) ethane, 1,2-bis(tri-sec-butoxysilyl)ethane, 1,2-bis(tri-t-butoxysilyl)ethane, 1-(dimethoxymethylsilyl)-1-(trimethoxysilyl)methane, 1-(diethoxymethylsilyl) 1-(triethoxysilyl)methane, 1-(di-n-propoxymethylsilyl)-1-(tri-n-propoxysilyl)methane, 1-(di-i-propoxymethylsilyl)-1-(tri-i-propoxysilyl)methane, 1-(di-n-butoxymethylsilyl)-1-(tri-n-butoxysilyl)methane, 1-(di-sec-butoxymethylsilyl)-1-(tri-sec-butoxysilyl)methane, 1-(di-t-butoxymethyl silyl)-1-(tri-t-butoxysilyl)methane, 1-(methoxymethylsilyl)-2-(trimethoxysilyl)ethane, 1-(diethoxymethylsilyl)-2-(triethoxysilyl)ethane, 1-(di-n-propoxymethylsilyl)-2-(tri-n-propoxysilyl)ethane, 1-(di-i-propoxymethylsilyl)-2-(tri-i-propoxysilyl)ethane, 1-(di-n-butoxymethylsilyl)-2-(tri-n-butoxysilyl)ethane, 1-(di-sec-butoxymethylsilyl)-2-(tri-sec-butoxysilyl)ethane, 1-(di-t-butoxymethylsilyl)-2-(tri-t-butoxysilyl)ethane, bis(dimethoxymethylsilyl)methane, bis(diethoxymethylsilyl)methane, bis(di-n-propoxymethylsilyl)methane, bis(di-i-propoxymethylsilyl)methane, bis(di-n-butoxymethylsilyl)methane, bis(di-sec-butoxymethylsilyl)methane, bis(di-t-butoxymethylsilyl)methane, 1,2-bis(dimethoxymethylsilyl)ethane, 1,2-bis(diethoxymethylsilyl)ethane, 1,2-bis(di-n-propoxymethylsilyl)ethane, 1,2-bis(di-i-propoxymethylsilyl)ethane, 1,2-bis(di-n-butoxymethylsilyl)ethane, 1,2-bis(di-sec-butoxymethylsilyl)ethane, 1,2-bis(di-t-butoxymethylsilyl)ethane, 1,2-bis(trimethoxysilyl)benzene, 1,2-bis(triethoxysilyl)benzene, 1,2-bis(tri-n-propoxysilyl)benzene, 1,2-bis(tri-i-propoxysilyl)benzene, 1,2-bis(tri-n-butoxysilyl)benzene, 1,2-bis(tri-sec-butoxysilyl)benzene, 1,2-bis(tri-t-butoxysilyl)benzene, 1,3-bis(trimethoxysilyl)benzene, 1,3-bis(triethoxysilyl)benzene, 1,3-bis(tri-n-propoxysilyl)benzene, 1,3-bis(tri-i-propoxysilyl)benzene, 1,3-bis(tri-n-butoxysilyl)benzene, 1,3-bis(tri-sec-butoxysilyl)benzene, 1,3-bis(tri-t-butoxysilyl)benzene, 1,4-bis(trimethoxysilyl)benzene, 1,4-bis(triethoxysilyl)benzene, 1,4-bis(tri-n-propoxysilyl)benzene, 1,4-bis(tri-i-propoxysilyl)benzene, 1,4-bis(tri-n-butoxysilyl)benzene, 1,4-bis(tri-sec-butoxysilyl)benzene, 1,4-bis(tri-t-butoxysilyl)benzene and the like.

In the present invention, as a method of applying the coating liquid, the known art such as a dipping method, a spin coat method, a spray method, a print method, a flow coat method, a roll coat method and simultaneous use of two or more of these methods may be suitably employed. The film thickness may be controlled by changing a taking out speed in the dipping method or a rotation speed of the base material in the spin coat method and by changing a concentration and/or a coefficient of viscosity of the coating liquid.

### Examples

The present invention will be explained in more detail hereunder with reference to the examples.

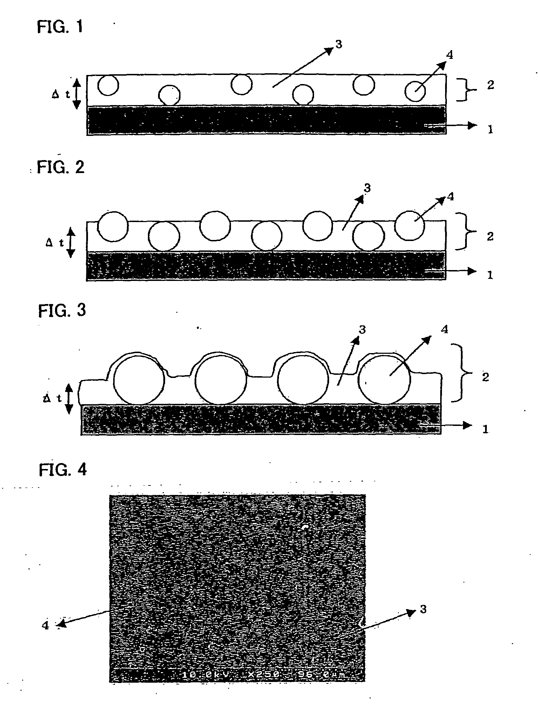

FIG 1, FIG 2 and FIG.3 are cross sectional views showing the composite materials of various patterns according to the present invention. On a ductile base material 1 there is provided a coated section 2. The coated section 2 comprises a siloxane network 3 and plastic polymer particles 4. The coated section 2 has a function of retaining a design property of the base material even in the case where the external force is applied thereto since the plastic polymer particles give a certain extent of flexibility to the coated section. Such composite material is capable of retaining the design property of the base material even in the case where the external force such as slide or the like of tableware, etc., for example, is applied thereto.

The plastic polymer particles 4 contained in the coated section 2 may be dispersed in the siloxane network 3 as shown in FIG. 1. A portion of each of the plastic polymer particles 4 may be exposed as shown in FIG 2, and a convex portion formed by an idiomorphic form of each of the plastic polymer particles 4 may be covered by the siloxine network 3. When an irregular structure which has the convex portion corresponding to an idiomorphic form of the plastic polymer particle is formed on the surface of the coated section, the plasticity of the plastic polymer particles is exerted more effectively while the function of retaining the design property of the base material in the case where the external force applied is effectively performed since the convex portions corresponding to the idiomorphic forms of the plastic polymer particles prevent the transmission of the external force to the siloxane network.

Next, a preferred manufacturing method of the composite material will be explained based on the results of experiments.

For the observation of the coated section of the composite material of the present invention a scanning electron microscope S4100 of Hitachi Seisakusho Co., Ltd. make was used.

The film thickness of the coated section may be examined by the observation of the cross section thereof. Also, the film thickness corresponds to a thickness (in the drawing, shown by Δt) of the siloxane network 3 and does not include a thickness of the convex portion formed by the plastic polymer particle.

The dispersing state of the plastic polymer particles in the coated section is observed on the surface side. With respect to the irregular structure, the observation is made in the oblique direction on the surface side so as to confirm that the plastic polymer particles form the convex portions.

The sizes of the plastic polymer particles are measured with a particle size dispersion meter SALD7000 of laser diffraction type of Shimazu Seisakusho Co. Ltd. make. The average particle size means a 50% center particle size of volume dispersion.

### (Example 1)

A stainless steel plate SUS304 for use in a counter was used as the base material. After the base material was cleaned with hexane as pre-cleaning, the surface of the base material was further cleaned with acetone. After applying the coating liquid of a compound as listed in Table 1 to the base material by a spray coat method, it was heated at 250 degrees centigrade for 60 minutes thereby forming the coated section in which fluorine resin particles are dispersed. The average particle size of the fluorine resin particles used was 5µm. The content of the fluorine resin particles in a non-volatile matter portion contained in the coating liquid (the non-volatile matter portion in a polysilazane liquid is shown by SiO₂ converted concentration) was 5.0% by weight.

The film thickness of the coated section was 0.5µm.

**[Table 1]**

| | |
|---|---|
| Polysilazane liquid (SiO₂ converted concentration 10%) | 100 parts by weight |
| Fluorine resin particle | 0.53 parts by weight |

### (Example 2)

The base material was the same as in Example 1.

After applying the coating liquid of a compound as listed in Table 2 to the base material by the spray coat method, it was heated at 250 degrees centigrade for 60 minutes to form the coated section in which fluorine resin particles are dispersed. The average particle size of the used fluorine resin particles was 10µm.

The content of the fluorine resin particles in the non-volatile matter portion contained in the coating liquid (the non-volatile matter portion in the polysilazane liquid is shown by SiO₂ converted concentration) was 5.0% by weight.

The film thickness of the coated section was 2.0µm.

**[Table 2]**

| | |
|---|---|
| Polysilazane liquid (SiO₂ converted concentration 10%) | 100 parts by weight |
| Fluorine resin particle | 0.53 parts by weight |

### (Example 3)

The base material was the same as in Example 1.

After applying the coating liquid of a compound as listed in Table 3 to the base material by the spray coat method, it was heated at 250 degrees centigrade for 60 minutes to form the coated section in which the fluorine resin particles are dispersed. The average particle size of the used fluorine resin particles was 5µm.

The content of the fluorine resin particles in the non-volatile matter portion contained in the coating liquid (the non-volatile matter portion in the polysilazane liquid is shown by SiO₂ converted concentration) was 15.0% by weight.

The film thickness of the coated section was 0.5µm.

**[Table 3]**

| | |
|---|---|
| Polysilazane liquid (SiO₂ converted concentration 10%) | 100 parts by weight |
| Fluorine resin particle | 1.76 parts by weight |

### (Example 4)

The base material was the same as in Example 1.

After applying the coating liquid of a compound as listed in Table 4 to the base material by the spray coat method, it was heated at 250 degrees centigrade for 60 minutes to form the coated section in which the fluorine resin particles are dispersed. The average particle size of the used fluorine resin particles was 0.3µm.

The content of the fluorine resin particles in the non-volatile matter portion contained in the coating liquid (the non-volatile matter portion in the polysilazane liquid is shown by SiO₂ converted concentration) was 5.0% by weight.

The film thickness of the coated section was 2.0µm.

**[Table 4]**

| | |
|---|---|
| Polysilazane liquid (SiO₂ converted concentration 10%) | 100 parts by weight |
| Fluorine resin particle | 1.32 parts by weight |

### (Example 5)

The base material was the same as in Example 1.

After applying the coating liquid of a compound as listed in Table 5 to the base material by the spray coat method, it was heated at 150 degrees centigrade for 60 minutes to form the coated section in which the fluorine resin particles are dispersed. The average particle size of the used fluorine resin particles was 5µm.

The content of the fluorine resin particles in the non-volatile matter portion contained in the coating liquid (the non-volatile matter portion in a polysiloxane oligomer liquid is shown by SiO₂ converted concentration) was 5.0% by weight.

The film thickness of the coated section was 2.0µm.

**[Table 5]**

| | |
|---|---|
| Polysiloxane oligomer liquid (SiO₂ converted concentration 20%) | 133.3 parts by weight |
| Isopropanol | 133.3 parts by weight |
| Fluorine resin particle | 1.33 parts by weight |

### (Example 6)

The base material was the same as in Example 1.

After applying the coating liquid of a compound as listed in Table 6 to the base material by the spray coat method, it was heated at 250 degrees centigrade for 60 minutes to form the coated section in which the fluorine resin particles are dispersed.

The average particle size of the used fluorine resin particles was 22µm.

The content of the fluorine resin particles in the non-volatile matter portion contained in the coating liquid (the non-volatile matter portion in the polysilazane liquid is shown by SiO₂ converted concentration) was 10.0% by weight.

The film thickness of the coated section was 2.0µm.

**[Table 6]**

| | |
|---|---|
| Polysilazane liquid (SiO₂ converted concentration 10%) | 100 parts by weight |
| Fluorine resin particle | 1.11 parts by weight |

### (Example 7)

The base material was the same as in Example 1.

After applying the coating liquid of a compound as listed in Table 7 to the base material by the spray coat method, it was heated at 200 degrees centigrade for 60 minutes to form the coated section in which methacrylic resin particles are dispersed.

The average particle size of the used methacrylic resin particles was 5µm.

The content of the methacrylic resin particles in the non-volatile matter portion contained in the coating liquid (the non-volatile matter portion in the polysilazane liquid is shown by SiO₂ converted concentration) was 2.5% by weight.

The film thickness of the coated section was 3.0µm.

**[Table 7]**

| | |
|---|---|
| Polysilazane liquid (SiO₂ converted concentration 10%) | 100 parts by weight |
| Bridged poly(methyl methacrylate) resin particle | 0.26 parts by weight |

### (Comparative Example 1)

As a comparative example, an SUS304 stainless steel plate is used.

### (Comparative Example 2)

Other than that the fluorine resin particles are removed from the coating liquid of Example 1, the coated section was formed in the same manner as the one in Example 1. The film thickness of the coated section was 0.5µm.

### (Comparative Example 3)

The base material was identical with Example 1.

After applying the coating liquid of a compound as listed in Table 8 to the base material by the spray coat method, it was heated at 250 degrees centigrade for 60 minutes to form the coated section in which the fluorine resin particles are dispersed.

The average particle size of the used fluorine resin particles was 0.3µm.

The content of the fluorine resin particles in the non-volatile matter portion contained in the coating liquid (the non-volatile matter portion in the polysilazane liquid is shown by SiO₂ converted concentration) was 0.1% by weight.

The film thickness of the coated section was 0.5µm.

**[Table 8]**

| | |
|---|---|
| Polysilazane liquid (SiO₂ converted concentration 10%) | 100 parts by weight |
| Fluorine resin particle dispersed liquid | 0.03 parts by weight |

### (Comparative Example 4)

The base material was identical with Example 1.

After applying the coating liquid of a compound as listed in Table 9 to the base material by the spray coat method, it was heated at 150 degrees centigrade for 60 minutes to form the coated section in which the fluorine resin particles are dispersed.

The average particle size of the used fluorine resin particles was 5µm. The content of the fluorine resin particles in the non-volatile matter portion contained in the coating liquid (the non-volatile matter portion in the polysiloxane oligomer liquid is shown by SiO₂ converted concentration) was 25.0% by weight.

The film thickness of the coated section was 2.0µm.

**[Table 9]**

| | |
|---|---|
| Polysiloxane oligomer liquid (SiO₂ converted concentration 20%) | 133.3 parts by weight |
| Isopropanol | 133.3 parts by weight |
| Fluorine resin particle | 8.88 parts by weight |

### (Comparative Example 5)

As a comparative example, an enameled stainless steel formed with a glazed layer on the surface of the stainless steel was used.

### (Evaluation Method)

### (1) External appearance

The external appearance was evaluated by visual observation.

### Criteria for evaluation:

Good: The design property of the base material is completely retained.
Fair: The design property of the base material is lowered to some extent but it is possible to confirm the design of the base material.
Poor: The design property of the base material is remarkably impaired and it is impossible to confirm the design of the base material.

### (2) Evaluation of ductility

The test was carried out in accordance with a bending test method of metallic materials stipulated in JIS (Japanese Industrial Standard) Z 2284. Test specimens of 100mm x 60mm were used. A span of a supporting jig was 80mm and the specimens were bent up to 20mm by a pressing metal fitting. After the test, the observation of defects such as splits, flaws and the like on the outside of a bent portion was made.

### Criteria for evaluation:

Good: No defect.
Fair: There are defects such as splits, flaws and the like which can be confirmed by a microscope of 50 magnifications.
Poor: There are defects such as splits, flaws and the like which can be confirmed by the visual observation.

### (3) Evaluation on the design property retaining characteristics of the base material when the external force was applied

The evaluation was performed only for the ones that the evaluation results were good with respect to the external appearance and the ductility.

As a sliding means a ceramic tile of 20mm x 20mm cut was used. After the ceramic tile was slid in a to-and-fro motion on the base material surface under such conditions that a load is further imposed on the base material surface, the change in design of the base material was judged by the visual observation.

The evaluation was performed on each case of 100g load and 500g load, and the slide times were 100 times. The 100g load was determined on the assumption that a weight of a mug cup level contacts while the 500g load was determined on the assumption that a weight of an earthenware pot level contacts.

In the case of assuming the contact with the weight of the earthenware pot, only when the design property is retained, the evaluation was performed on the case where the slide times were increased further up to 400 times.

### Criteria for evaluation:

Excellent: No flaw is generated and there is no change in design property.
Good: Minute flaws are generated but the design property is retained.
Fair: Flaws are generated and the design property is lowered to some extent.
Poor: Marked flaws are generated and the design property is remarkably impaired.

### (4) Exposure evaluation

The evaluation was performed for Examples 1 through 7 and Comparative example 7 only.

After being exposed for three months in a kitchen sink of a family of four, an ordinary cleaning was carried out with an abrasive contained sponge so as to be evaluated.

### Criteria for evaluation:

Good: The design property is retained in almost the same condition as before exposure.
Fair: There is a little stain left and a slight scratch due to the cleaning thereby to impair the design property to some extent.
Poor: The stain is not removed or there is a marked scratch due to the cleaning, so that the design property is remarkably impaired.

### (Evaluation Results)

The evaluation results are shown in Table 10.

**[Table 10]**

| | External appearance | Ductility | Design retaining characteristic when applying external force | | | Exposure evaluation External appearance after cleaning |
|---|---|---|---|---|---|---|
| | | | Slide 100 times/100g load | Slide 100 times/500g load | Slide 400 times/500g load | |
| Example 1 | Good | Good | Excellent | Good | Fair | Good |
| Example 2 | Good | Good | Excellent | Excellent | Excellent | Good |
| Example 3 | Good | Good | Excellent | Good | Fair | Good |
| Example 4 | Good | Good | Excellent | Good | Good | Good |
| Example 5 | Good | Good | Excellent | Good | Fair | Good |
| Example 6 | Fair | Good | Excellent | Good | Fair | Good |
| Example 7 | Good | Good | Good | Fair | - | Good |
| Comparative example 1 | Good | Good | Poor | Poor | - | Poor |
| Comparative example 2 | Good | Good | Fair | Poor | - | |
| Comparative example 3 | Good | Good | Fair | Poor | - | - |
| Comparative example 4 | Fair | Good | Fair | Poor | - | |
| Comparative example 5 | Poor | Poor | - | - | - | |

FIG 4 is an observation photograph of the coated section of Example 2 taken from the surface side thereof. In Examples 1 through 6 of the present invention, as a result of the observation of the coated section by the scanning electron microscope from the surface side and in the oblique direction, it was able to be confirmed that the fluorine resin particles are dispersed in the coated section and the convex portions are formed on the surface of the coated section by the idiomorphic forms of the fluorine resin particles. In Example 7, as a result of the observation of the coated section by the scanning electron microscope from the surface side and in the oblique direction, also it was able to be confirmed that the methacrylic acid resin particles are dispersed in the coated section and the convex portions are formed on the surface of the coated section by the idiomorphic forms of the methacrylic acid resin particles.

In Examples 1 through 5 and 7 of the present invention, the design property of the base material was completely retained even after forming the coated section. Example 6 was slightly inferior in transparency to Examples 1 through 5 but it was possible to confirm the design property.

Examples 1 through 7 of the present invention each had no defects such as cracks and the like in the bent portions thereof even after the bending test, and maintained the ductility. The stress-strain characteristics at the time of the bending test were the same as the base material and no change was confirmed.

In Examples 1 through 7 of the present invention, the design property of the base material was retained even in the case where the external force assuming the contact with the weight of the earthenware pot was applied.

The composite materials of Examples 2 and 4 retained the design property well even when the slide times were further increased, and particularly in Example 2, the design property of the base material was completely retained even when the slide times were increased.

As apparent from Table 10, the enameled stainless steel of Comparative example 5 formed with the glazed layer was not the one capable of confirming the design property of the base material, and the cracks were generated on the bent portion by the bending test. In particular, the glazed layer was completely peeled off the base material on the end of the test specimen.

In the SUS304 stainless steel plate of Comparative example 1, flaws were generated markedly even by the application of the external force at the level of 100g and 100 times, so that the design property of the base material was remarkably impaired. Comparative example 2 formed with the coated section not containing the fluorine resin particles developed the design retaining characteristics a little in comparison with Comparative example 1, but the deterioration of the design property was confirmed even in the case where the external force at the level of 100g and 100 times was applied while when the 500g load was imposed, flaws were generated markedly so that the design property of the base material was remarkably impaired. Also, Comparative examples 3 and 4 developed the design retaining characteristics a little in comparison with Comparative example 1, but the deterioration of the design property was confirmed even in the case where the external force at the level of 100g and 100 times was applied while when the 500g load was imposed, flaws were generated markedly so that the design property of the base material was remarkably impaired.

Further, in the exposure evaluation, a white stain like what is called a water scale adhered in all of Comparative examples. In Examples 1 through 7 of the present invention there was a negligible amount of stain adhesion in comparison with Comparative example 1. However, all of the stains were easily removed by carrying out the cleaning. Moreover, there was no generation of flaws due to the cleaning so that the design property was retained at the same level as before the exposure. In Comparative example 1, the stains were not removed even by carrying out the cleaning and flaws were generated in the base material before the removal of the stains, so that the design property was remarkably impaired due to stains and flaws which were not removed.

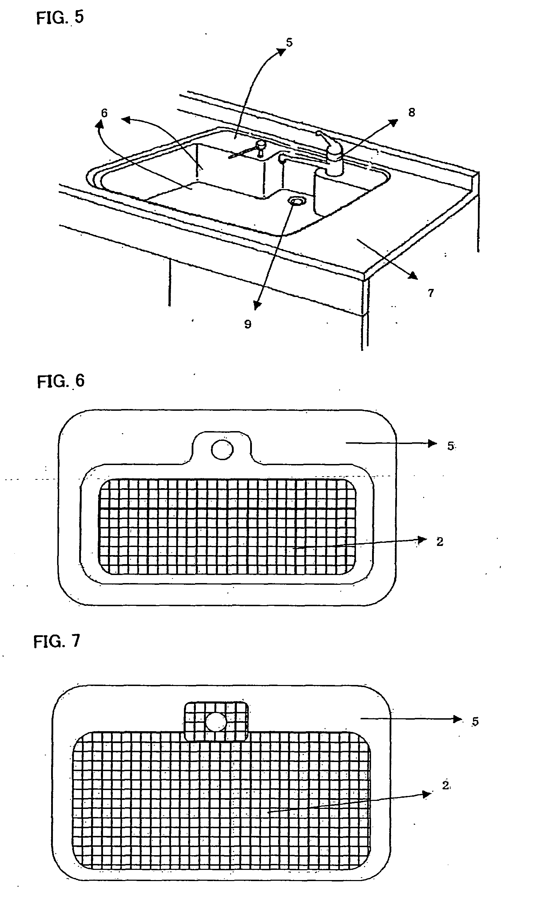

FIG. 5 is a schematic view of a kitchen with a sink provided with the composite material of the present invention.

The sink 5 provided with the composite material of the present invention is fixedly fitted to a counter 7. A stopcock 8 is provided on the sink. The cleaning of the tableware or the like in the sink 5 is carried out by water spouted through the stopcock 8 and the water is drained from a drain outlet 9.

FIG. 6 is an enlarged view of the kitchen sink 5 shown in FIG 5, wherein the coated section 2 is provided on a portion (the portion shown in a mesh pattern) of the sink bottom.

In this embodiment, the coated section 2 is formed on a portion of the sink bottom as shown in FIG 6.

Next, explanation will be made with respect to the usage of this embodiment. Users place the tableware or the like on a surface to be used of the bottom wall in the sink 5 of this embodiment so as to carry out cleaning operations of the tableware or the like. When cleaning a plurality of tableware, the tableware once placed on the used surface of the bottom wall is picked up and moved laterally within the sink. Then, although there are cases where the tableware is rubbed on the used surface of the bottom wall thereby to generate flaws, in this embodiment the coated section 2 is formed on the used surface 6 of the bottom wall so as not to generate flaws whereby the design property of the base material is retained. Herein, the used surface of the sink means the lateral wall surface and the bottom wall surface and in detail it means the surface to be used as a kitchen sink, as shown in FIG 5. Such a surface which is not shown as a back side surface hidden within a cabinet is not the used surface.

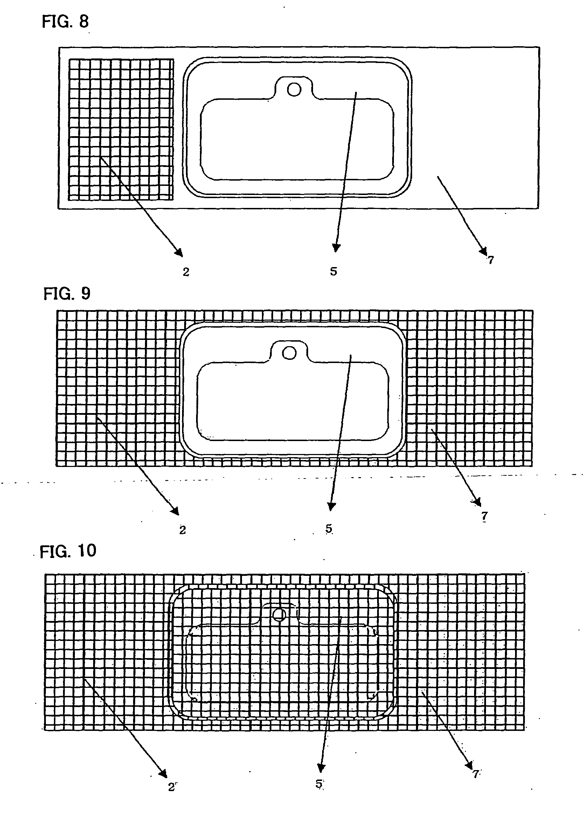

In another embodiment, the coated section is formed on the entire surface of the bottom wall of the sink 5, as shown in FIG. 7. In this case, a difference in level is not formed between an end of the coated section and an uncoated portion and the end of the coated section is not conspicuous by light reflection, so that it is more preferable. Moreover, as other embodiments, there are the one that the coated section is formed on a portion of the counter 7 as shown in FIG. 8 and the one that the coated section is formed on an entire surface of the counter as shown in FIG 9. In still another embodiment, the coated section is formed both the sink 5 and the counter 7.

Herein, the usage of the embodiment having the coated section formed on both the sink 5 and the counter 7 will be explained.

Users place the tableware or the like on the used surface 6 of the bottom wall in the sink 5 of this embodiment so as to carry out cleaning operations of the tableware or the like. When cleaning a plurality of tableware, the tableware once placed on the used surface 6 of the bottom wall is picked up, moved laterally within the sink and placed on the counter 7. Then, although there are cases where the tableware is rubbed on the used surface 6 of the bottom wall and the counter 7 thereby to generate flaws, in this embodiment the coated section 2 is formed on the used surface 6 of the bottom wall so as not to generate flaws, whereby the design property of the base material is retained.

Next, the composite material has the ductile base material forming the sink and the coated section being provided on the entire surface of the bottom wall as shown in FIG 7 will be explained by giving Examples.

### (Example 8)

As the base material there is used the same one as Example 1. The composite material being characterized in that the ductile base material forms the sink and the coated section is provided on the entire surface of the bottom wall as shown in FIG 7, is obtained by drawing the base material into the shape of the sink, cleaning the surface of the base material sufficiently, spray-coating the same coating liquid as Example 2, and heating the coated base material at 250 degrees centigrade for 60 minutes.

### (Example 9)

The composite material being characterized in that the ductile base material forms the sink and the coated section is provided on the entire surface of the bottom wall as shown in FIG 7, is obtained by cleaning the surface of the base material sufficiently, spray-coating the same coating liquid as Example 2, heating the coated base material at 250 degrees centigrade for 60 minutes, and drawing the base material into the shape of the sink.

### (Comparative Example 6)

The sink of stainless steel on the open market is used as a comparative example.

### (Evaluation Method)

### (1) External appearance

The external appearance of the composite material was evaluated by the visual observation.

### Criteria for evaluation:

Good: The design property of the base material is perfectly retained.
Fair: The design property of the base material is lowered to some extent but it is possible to confirm the design of the base material.
Poor: The design property of the base material is remarkably impaired and it is impossible to confirm the design of the base material.

### (2) Evaluation on the design property retaining characteristics of the base material when the external force was applied

After the earthen pot was slid 100 times and 400 times each in a to-and-fro motion, the change in design of the base material was judged by the visual observation.

### Criteria for evaluation:

Excellent: No flaw is generated and there is no change in design property.
Good: Minute flaws are generated but the design property is retained.
Fair: Flaws are generated and the design property is lowered to some extent.
Poor: Marked flaws are generated and the design property is remarkably impaired.

### (3) Evaluation on changes of the coated section when dropping a weight

Whether or not there are peeling and release in the coated section when dropping an iron ball of 300g from a height of 20cm was judged by the visual observation.

### Criteria for evaluation:

Good: There is no change.
Fair: There is the peeling or release in a portion.
Poor: The coated section is completely peeled or released.

### (4) Evaluation on changes of the coated section when spraying boiled water and cold water repeatedly.

After spraying the boiled water of 90 degrees centigrate for a minute and the cold water of 20 degrees centigrade for a minute repeatedly 1000 times, whether or not there are peeling and release in the coated section was judged by the visual observation.

### Criteria for evaluation:

Good: No change occurs.
Fair: Peeling or release occurs in a portion.
Poor: The coating section is completely peeled or released.

### (Evaluation Results)

The evaluation results are shown in Table 11.

**[Table 11]**

| | External appearance | Design retaining characteristic when applying external force | | Change in coated section when dropping weight | Change in coated section by repeated spraying of boiled water and cold water |
|---|---|---|---|---|---|
| | | 100 times | 400 times | | |
| Example 8 | Good | Excellent | Excellent | Good | Good |
| Example 9 | Good | Excellent | Good | Good | Good |
| Comparative example 6 | Good | Poor | Poor | - | - |

As apparent from Table 11, Examples 8 and 9 of the present invention retained the design property of the base material even after forming the coated section. In Examples 8 and 9 of the present invention, no flaw was generated and no change occurred in the design property, even when having the earthenware pot slid 100 times in a to-and-fro motion. Moreover, in Example 8, no flaw was generated even in the case of 400 times slide in a to-and-fro motion. With respect to the stainless steel sink of Comparative example 6, flaws were generated markedly so that the design property was remarkably impaired.

Further, when dropping the weight, the ductile base material was changed in the shape thereof but there was no change in the coated section while the follow-up characteristics to the base material were confirmed.

Further, when having sprays of the boiled water and the cold water repeated, the ductile base material repeated expansion and contraction intermittently but any change did not occur in the coated section while the follow-up characteristics to the base material was confirmed.

### Applicability to the Industry

The composite material of the present invention can be used for the kitchen sink or the like.

## Claims

1. A composite material comprising a base material and a coated section arranged on said base material, wherein said coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein said plastic polymer particles are dispersed in said coated section without coming substantially in contact with each other.

2. A composite material comprising a base material and a coated section arranged on said base material, wherein said coated section contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles, and wherein the content of said plastic polymer particles in said coated section is not less than 1% by volume and less than 20% by volume.

3. The composite material according to claim 1 or 2, wherein an irregular structure which has convex portions corresponding to an idiomorphic form of said plastic polymer particle is formed on a surface of said coated section.

4. The composite material according to claim 3, wherein an average particle size of said plastic polymer particles is larger than a film thickness of said coated section.

5. The composite material according to any one of claims 1 through 4, wherein a film thickness of said coated section is from 0.3µm to 20µm.

6. The composite material according to claim 5, wherein the film thickness of said coated section is from 0.3µm to 8µm.

7. The composite material according to any one of claims 1 through 6, wherein an average particle size of said plastic polymer particles is from 0.1 µm to 20µm.

8. The composite material according to claim 7, wherein the average particle size of said plastic polymer particles is from 0.1µm to 8µm.

9. The composite material according to any one of claims 1 through 8, wherein said coated section is substantially transparent.

10. The composite material according to any one of claims 1 through 9, wherein said base material is a ductile base material.

11. The composite material according to claim 10, wherein said ductile base material is stainless steel or aluminum.

12. The composite material according to claim 10 or 11, wherein said ductile base material forms a sink and/or a counter, and said coated section is provided on at least a portion of a used surface of the sink and/or the counter.

13. A coating liquid which is applied to a base material and cured by heating to form a coated section on said base material, containing plastic polymer particles and (C) a compound represented by a following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, **characterized in that** the coating liquid contains said plastic polymer particles and (C) the compound represented by the following structural formula [-(SiR1R2)-(NR3)-]ₙ in which each of R1, R2 and R3 is independently a hydrogen atom, an alkyl radical, an alkenyl radical, a cycloalkenyl radical, an amino radical, an alkylamino radical, an alkylsilyl radical, an alkoxy radical or another radical which has a carbon as a radical directly connected to a principal chain of silicon and nitrogen, and n is an integer, in such a state that a content of said plastic polymer particles in said coated section is not less than 1% by volume and less than 20% by volume.

14. The coating liquid according to claim 13, wherein an average particle size of said plastic polymer particles is from 0.1µm to 20µm.

15. The coating liquid according to claim 14, wherein the average particle size of said plastic polymer particles is from 0.1µm to 8µm.

16. A coating liquid which is applied to a base material and cured by heating to form a coated section on a base material, containing plastic polymer particles and at least a kind of compound selected from the group consisting of (D) (D-1) a compound represented by a following general formula (1), RₐSi(OR4)₄₋ₐ (1) (in the formula, R is a hydrogen atom, a fluorine atom or a univalent organic radical, and "a" is an integer of from 1 to 2), (D-2) a compound represented by a following general formula (2), Si(OR5)₄ (2) (in the formula, R5 is a univalent organic radical), and (D-3) a compound represented by a following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of said compound, **characterized in that** the coating liquid contains said plastic polymer particles and at least a kind of the compound selected from the group consisting of (D) (D-1) the compound represented by the following general formula (1), RₐSi(OR4)₄₋ₐ (1) (in the formula, R is a hydrogen atom, a fluorine atom or a univalent organic radical, and "a" is an integer of from 1 to 2), (D-2) the compound represented by the following general formula (2), Si(OR5)₄ (2) (in the formula, R5 is a univalent organic radical), and (D-3) the compound represented by the following general formula (3), R6_{b}(R7O)_{3-b}Si-(R10)_{d}-Si(OR8)_{3-c}R9_{c} (3) (in the formula, each of R6 through R9 is a univalent organic radical, "b" and "c" are integers of from 0 to 2, R10 is an oxygen atom, a phenylene radical or a radical represented by - (CH₂)ₘ - (herein, "m" is an integer of from 1 to 6), and "d" is 0 or 1) or the hydrolyzed one of said compound in such a state that a content of said plastic polymer particles in said coated section is not less than 1% by volume and less than 20% by volume.

17. The coating liquid according to claim 16, wherein an average particle size of said plastic polymer particles is from 0.1µm to 20µm.

18. The coating liquid according to claim 17, wherein the average particle size of said plastic polymer particles is from 0.1µm to 8µm.

19. A manufacturing method of the composite material comprising the steps of applying the coating liquid described in any one of claims 13 through 15 to a base material, and curing said coating liquid by heating together with said base material to form on said base material a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles.

20. A manufacturing method of the composite material comprising the steps of applying the coating liquid described in any one of claims 16 through 18 to a base material, and curing said coating liquid by heating to form on said base material a coated section which contains (A) silica or at least a kind selected from the group of an average composition formula RₚSiO_{(4-p)/2} in which R is a hydrogen atom, a fluorine atom or a univalent organic radical, and p is a number which satisfies 0<p<4, and (B) plastic polymer particles.

21. A manufacturing method of a composite material comprising the steps of drawing a ductile base material into the form of a sink and/or a counter, applying the coating liquid described in any one of claims 13 through 15 to said ductile base material, and curing said coating liquid by heating together with said base material.

22. A manufacturing method of a composite material comprising the steps of drawing a ductile base material into the form of a sink and/or a counter, applying the coating liquid described in any one of claims 16 through 18 to said ductile base material, and curing said coating liquid by heating.

23. A manufacturing method of a composite material comprising the steps of applying the coating liquid of any one of claims 13 through 15 to a ductile base material, curing said coating liquid by heating together with said base material, and drawing said base material into the form of a sink and/or a counter.

24. A manufacturing method of a composite material comprising the steps of applying the coating liquid of any one of claims 16 through 18 to a ductile base material, curing said coating liquid by heating, and drawing said base material into the form of a sink and/or a counter.
